# EUROPÄISCHE PATENTANMELDUNG

(11) **EP 0 673 838 A1**
(43) Veröffentlichungstag der Anmeldung: **27.09.1995**
(21) Anmeldenummer: 95102907.3
(22) Anmeldetag: 01.03.1995
(51) Int. Cl.: B65B 63/02

(54) **Vorrichtung zum Pressen und Verpacken von Abfällen**

(30) Priorität: 22.03.1994 DE 9404894 U
(71) Anmelder: GREENLAND GMBH & CO. KG, D-78244 Gottmadingen (DE)
(72) Erfinder: Szybowicz, Wolfgang, D-78464 Konstanz (DE)
(74) Vertreter: Grünecker, Kinkeldey, Stockmair & Schwanhäusser Anwaltssozietät

(57) **Zusammenfassung**

Es wird eine Vorrichtung zum Pressen und Verpacken von Folien-, Papier- und Pappe-Abfällen (Y), insbesondere von Kunststoff-Verpackungsfolien bzw. Schrumpffolien bestehenden Abfällen beschrieben, die kostengünstig und universell einsetzbar ist, um das Transport- und Lagerhaltungsvolumen dieser Abfälle weitgehend zu minimieren und die Handhabung der Abfälle bei ihrer Rückführung bzw. Überführung zur Entsorgung oder zu Recyclingprozessen zu vereinfachen. Zu diesem Zweck wird in einem Gehäuse (G) eine im wesentlichen zylindrische Preßkammer (K) mit horizontaler Achse (X) und unveränderbarer Größe vorgesehen, die durch beabstandete Seitenwände (S) und mehrere über den Umfang verteilte, zu einer gleichsinnigen Drehung antreibbare, parallele Preßwalzen (W) begrenzt ist und eine nach außen offene Einfüllöffnung (E) aufweist. Am Gehäuse (G) ist ein der Einfüllöffnung (E) abgewandter Teil (5) der Preßkammer (K) aufklappbar. Im Gehäuse (G) ist eine Einbindestation (B) mit Bindematerialspeicher (7) vorgesehen, wobei in der Preßkammer (K) aus durch die Einfüllöffnung (E) eingeführten Abfällen (Y) ein verdichteter Rundballen rollbar, während der Rollbewegung um die Preßkammerachse (X) in Bindematerial einbindbar und durch Öffnen des aufklappbaren Preßkammerteils (5) auswerfbar ist.

## Beschreibung

Die Erfindung betrifft eine Vorrichtung der im Oberbegriff des Patentanspruchs 1 angegebenen Art.

Aufgrund behördlicher Vorschriften müssen Geschäfte, Großhändler und letztendlich auch Herstellerfirmen Verpackungsmaterial ihrer Waren vom Kunden zurücknehmen und der Entsorgung oder einem Recyclingprozeß zuführen. Papier-, Pappe- und Kunststoffolien-Abfälle, insbesondere größere Schrumpffolien- oder Kunststoffsack-Abfälle, beanspruchen beim Transport und bei der Lagerung außerordentlich große Volumina bei geringem Gewicht. Die Kosten für den Transport und die Lagerhaltung solcher Abfälle sind deshalb enorm.

Der Erfindung liegt die Aufgabe zugrunde, eine Vorrichtung zum Pressen und Verpacken solcher Abfälle zu schaffen, die kostengünstig und universell einsetzbar ist, um das Transport- und Lagerhaltungsvolumen dieser Abfälle weitgehend zu minimieren und die Handhabung der Abfälle bei ihrer Rückführung bzw. Überführung zur Entsorgung oder zu Recyclingsprozessen zu vereinfachen.

Die gestellte Aufgabe wird mit der Vorrichtung gemäß Patentanspruch 1 gelöst.

Die Vorrichtung ist baulich einfach, robust und bedienungsfreundlich. Sie läßt sich jeweils dort aufstellen, wo solche Abfälle in ausreichendem Maß anfallen. Die Preßkammer wird mit Abfällen gefüllt, die in einer rollenden Bewegung verdichtet und zu einem Rundballen verformt, eingebunden und dann ausgeworfen werden. Durch die Verdichtung werden die Abfälle auf einem relativ kleinen Volumen konzentriert. Dank der Einbindung in das Bindematerial bleiben die ausgeworfenen Rundballen formstabil. Sie lassen sich einfach handhaben, platzsparend stapeln und transportieren und auf einfache Weise der Entsorgung oder einem Recyclingverfahren zuführen.

In der Landwirtschaftstechnik sind fahrbare Rundballenpressen bekannt, die bei der Fahrbewegung Erntegut aufnehmen und daraus eingebundene Rundballen bilden, um dem Landwirt die Ernte zu vereinfachen und eine gleichbleibende Qualität des Erntegutes sicherzustellen, indem das im Rundballen enthaltene Erntegut weitgehend dem schädlichen Einfluß der Sonne, des Windes und des Regens entzogen wird. Die Rundballenpresse wird von einem Schlepper gezogen, der auch die Antriebsleistung für die Rundballenpresse bereitstellt.

Die Ausführungsform gemäß Anspruch 2 läßt sich mit wenig Aufwand am jeweiligen Einsatzort aufstellen bzw. umsetzen.

Die Ausführungsform gemäß Anspruch 3 ist, falls ein Elektromotor als Antriebsmotor benutzt wird, nur auf einen Versorgungsanschluß angewiesen. Wird ein Verbrennungsmotor benutzt, dann läßt sich die Vorrichtung überall ohne externe Energieversorgung einsetzen. Gegebenenfalls ist der Verbrennungsmotor als Antriebsquelle eines Stromgenerators vorgesehen, von dem aus der Elektromotor gespeist wird. Der gemeinsame Antrieb aller Preßwalzen hat den Vorteil, daß sich die spezifische Belastung pro Preßwalze niedrig halten läßt und trotzdem eine hohe Verdichtung der zu verpressenden Abfälle erreicht wird.

Bei der Ausführungsform gemäß Anspruch 4 ist die Beschickung der Vorrichtung besonders einfach. Die Abfälle werden von Hand mittels einer Gabel oder direkt durch vorgeschaltete Zuführeinrichtungen oder von einem Fahrzeug über die Fördervorrichtung in die Preßkammer gebracht.

Bei der Ausführungsform gemäß Anspruch 5 läßt sich jeder fertige Rundballen einfach und rasch auswerfen. Die Vorrichtung ist schnell wieder zur Herstellung eines neuen Rundballens bereit. Durch die voneinander abgewandten Positionen der Einfüllöffnung und der Auswurföffnung sind gegen seitige Behinderungen zwischen vor der Vorrichtung liegenden Abfällen und hinter der Vorrichtung anfallenden Rundballen vermieden. Die nach oben schwenkende Klappe ermöglicht das problemlose Austreten des fertigen Rundballens durch dessen Eigengewicht, wobei der Höhenabstand zum Boden nur mehr so groß gewählt wird, daß der Rundballen problemlos herausrollt, ohne beschädigt zu werden.

Baulich einfach ist die Ausführungsform gemäß Anspruch 6. Der Hydraulikzylinder oder zweckmäßgerweise zwei paarweise arbeitende Hydraulikzylinder werden angesteuert, sobald feststeht, daß der Rundballen fertig gerollt und eingebunden ist. Durch die vom Antriebsmotor getriebene Hydraulikversorgung oder ein separates Hydraulikaggregat wird trotz der hydraulischen Komponenten der Vorrichtung die Unabhängigkeit von externen Energiequellen gewährleistet.

Besonders wichtig ist die Ausführungsform von Anspruch 7. Es lassen sich Rundballen gleichförmiger und möglichst hoher Dichte herstellen, um Transport- oder Lagerraum zu sparen. Die Preßdichte-Meßvorrichtung stellt sicher, daß die Komponenten der Vorrichtung keinen Schaden nehmen.

Wichtig ist in diesem Zusammenhang auch die Ausführungsform gemäß Anspruch 8, weil der durch den die Preßwalzen beaufschlagenden Rundballen steigende Druck im Hydraulikzylinder ein Maß der Preßdichte und zum Anzeigen bzw. Abschalten nutzbar ist.

Bei der Ausführungsform gemäß Anspruch 9 läuft das Bindematerial direkt in die Preßkammer ein. Im Speicher kann genügend Bindematerial für eine Vielzahl von Rundballen vorliegen. Das Einbinden erfolgt entweder automatisch oder durch manuellen Eingriff der Bedienungsperson über die Steuervorrichtung.

Insbesondere für schwierig zu handhabende Abfälle von Schrumpffolien oder Foliensäcken ist als Bindematerial ein Netz zweckmäßig, das durch die Rollbewegung des Rundballens in der Preßkammer selbsttätig um den Außenumfang des Rundballens gewickelt wird und sich ineinander so verzahnt, daß sich die Umhüllung ohne gesonderte Verschließelemente nicht löst. Bindedraht oder Bindegarn kann ebenfalls zum Einbinden verwendet werden, gegebenenfalls sogar zusätzlich zum Netzmaterial.

Die Ausführungsform gemäß Anspruch 11 ist vorteilhaft, weil von der Plattform aus günstig an der Vorrichtung gearbeitet werden kann. Die Plattform hat gleichzeitig die Aufgabe, den Schacht zur Einfüllöffnung nach oben abzudecken.

Wichtig ist auch das Merkmal von Anspruch 12, weil bei Eintreten zu großer Objekte in den Schacht oder für den Fall, daß sich ein Tier oder ein Mensch in den Schacht bewegt, die Vorrichtung selbsttätig abgeschaltet wird.

Bei der Ausführungsform gemäß Anspruch 13 wird das Ausstoßen des fertigen Rundballens mittels der Ablaufstütze begünstigt. Die Ablaufstütze hat ferner den Vorteil, daß sie den ausgestoßenen Rundballen am Zurückbewegen in Richtung zur Vorrichtung hindert, so daß die Klappe nach dem Ausstoßen des Rundballens wieder sicher zu schließen ist.

Schließlich ist die Vorrichtung gemäß Anspruch 14 vorteilhaft, weil sie in der Landmaschinentechnik bereits bewährte Teilmerkmale gewinnbringend zum Pressen und Verpacken von Abfällen aus Folien, Papieren oder Pappe einsetzt, um die Entsorgung dieser Abfälle zu vereinfachen.

Anhand der Zeichnung wird eine Ausführungsform des Erfindungsgegenstandes erläutert. Es zeigen:
- Fig. 1: eine schematische Seitenansicht einer erfindungsgemäßen Vorrichtung, und
- Fig 2: ein Schemabild zum Innenaufbau der Vorrichtung von Fig. 1.

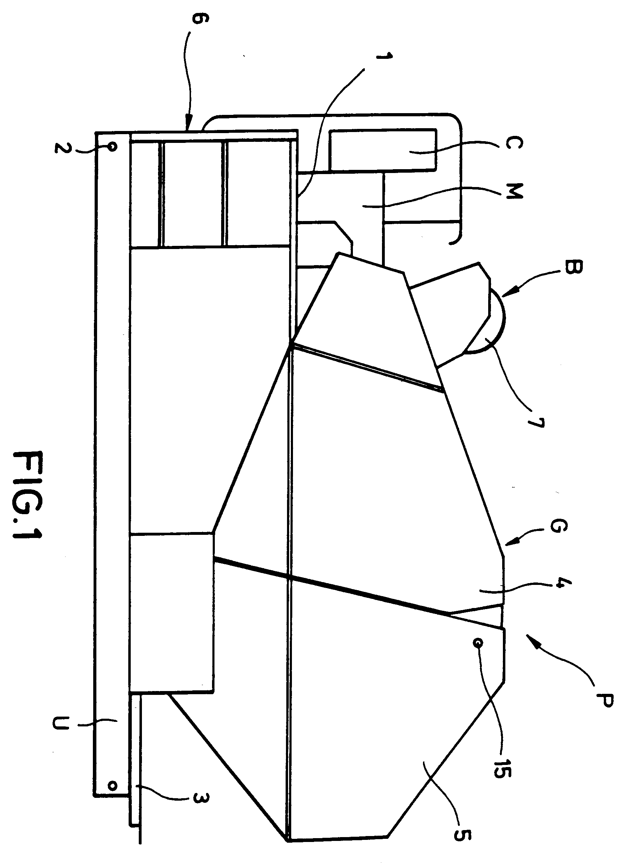

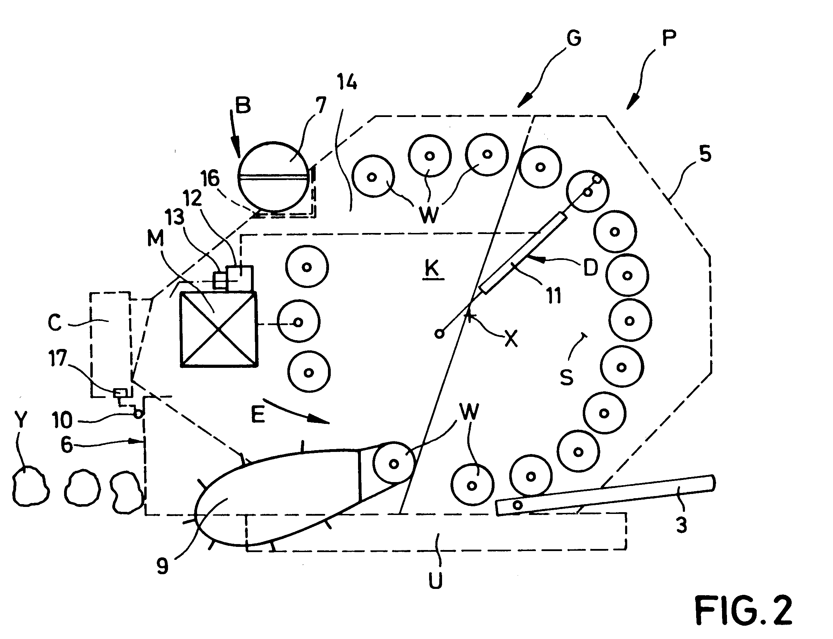

Eine Vorrichtung P zum Pressen und Verpacken von Kunststoffolien-Abfällen, insbesondere Schrumpffolien-Abfällen Y gemäß den Fig. 1 und 2 wird stationär eingesetzt und besitzt ein auf einem Unterbau U ruhendes Gehäuse G. Die Vorrichtung P wird durch einen zu einer Einfüllöffnung E führenden Schacht 6 mit den Abfällen beschickt, z.B. durchschaufeln, wobei eine Fördervorrichtung 9 die Abfälle Y durch die Einfüllöffnung E in eine zylindrische Preßkammer PK überführt. Die Preßkammer K ist seitlich begrenzt von beabstandeten Seitenwänden S, zwischen denen sich eine Vielzahl zueinander paralleler, Preßwalzen W erstrecken, die gemeinsam gleichsinnig angetrieben sind. Beispielsweise ist eine Antriebsrichtung gewählt, mit der alle Preßwalzen im Uhrzeigersinn drehen, so daß die Abfälle Y in der Preßkammer K entgegen dem Uhrzeigersinn rotieren. Gegebenenfalls ist bei der Einfüllöffnung ein obenliegendes Abweisblech (nicht gezeigt) vorgesehen, das verhindert, daß die Abfälle wieder aus der Einfüllöffnung heraus und auf die Fördervorrichtung 9 fallen. Die Preßwalzen P liegen relativ dicht aneinander. Zwei benachbarte Preßwalzen W sind im Bereich eines Einführspaltes 14 etwas voneinander abgerückt. Auch im Bereich der Einfüllöffnung E sind die dort vorliegenden, benachbarten Preßwalzen W voneinander abgerückt. Durch die Zuführvorrichtung nachgeschobene Abfälle verdichten die Füllung in der Preßkammer K, bis ein allmählich anwachsender runder Ballen aus verdichteten Abfällen um die mit X angezeigte, horizontale Preßkammerachse rotiert. Ist eine bestimmte Dichte im Rundballen erreicht, dann wird die Zufuhr weiterer Abfälle gestoppt und durch die Einführöffnung 14 ein Bindematerial eingeführt (nicht gezeigt), z.B. eine Netzbahn, die in einem Bindematerialspeicher 7 bereits gehalten ist. Das Bindematerial wird vom rotierenden Rundballen mitgenommmen und wickelt diesen allmählich ein, wobei infolge des Drucks durch die Preßwalzen einander überlappende Bindematerialenden ineinander verzahnt werden. Mit einer Trennvorrichtung 16 wird das Bindematerial abgetrennt und ein hinterer Teil 5 der Preßkammer K um eine obenliegende Schwenkachse 15 nach hinten oben aufgeklappt, so daß der fertige Rundballen herausfällt, der dann entsorgt oder abtransportiert werden kann. Die Auswurfbewegung des Rundballens wird durch eine Ablaufstütze 3 begünstigt, der entlang der fertige Rundballen auf den Boden oder auf eine bereitgestellte Ablage rollt, und die gegebenenfalls dann wieder hochschwenkt, so daß der Rundballen dann nicht zurücklaufen kann und die Schließbewegung des Teils 5 verhindert. Dann wird mit der Formung eines neuen Rundballens durch erneute Zufuhr von Abfällen Y begonnen.

Am Unterbau U können Hebeanschlußpunkte 2 oder absenkbare Räder zum Transport oder Umstellen der Vorrichtung P vorgesehen sein. Der hintere Teil der Preßkammer 5 ist als Klappe um die obenliegende Schwenkachse 15 schwenkbar, und zwar mittels zweier Hydraulikzylinder 11 eines Schließ- und Öffnungsantriebes D der Klappe. Die Klappe ist so in das Gehäuse G eingegliedert, daß der Rundballen zweckmäßigerweise allein durch sein Gewicht aus der Preßkammer K herausfällt, sobald die Klappe geöffnet ist.

Die Preßwalzen sind entweder starr aber drehbar gelagert, oder radial geringfügig nachgiebig abgestützt. Sie werden angetrieben durch einen Antriebsmotor M, der ein Elektromotor oder ein Verbrennungsmotor ist bzw. ein Verbrennungsmotor mit einem Generator zur Versorgung eines Elektromotors. Der Antriebsmotor M befindet sich oberhalb des Schachtes 6 und in der Nähe einer Steuervorrichtung C, die von unten oder auf einer oberhalb des Schachtes 6 angeordneten Plattform zugänglich ist. Von der Plattform 1 ist ferner eine Einbindestation B mit dem Bindematerialspeicher 7 zugänglich. Die innenliegenden, beweglichen Komponenten der Vorrichtung P sind durch die Gehäuseteile, z.B. die Abdeckung 4, nach außen abgeschirmt. Die Gehäuseteile lassen sich abbauen.

Oberhalb des Schachtes ist ein Querbügel 10 als Sicherheitsvorrichtung vorgesehen, der bei Berührung oder Auslenkung eine Abschaltvorrichtung 17 betätigt, die mit der Steuervorrichtung C verbunden ist. Die Steuervorrichtung C ist ferner mit dem Antriebsmotor M und einer Hydraulikversorgung 12 sowie einer Preßdichte-Meßvorrichtung 13 verbunden. Auch die Bindestation läßt sich von der Steuervorrichtung C aus steuern.

Als Meßglied der Preßdichte-Meßvorrichtung dient zweckmäßigerweise einer der beiden Hydraulikzylinder 11, dessen mit zunehmender Verdichtung im Rundballen wachsender Haltedruck ein Maß für die Verdichtung ist und dann über die Meßvorrichtung 13 entweder eine Anzeige betätigt oder auf andere Weise die Zufuhr weiterer Abfälle unterbricht. Dann wird die Bindestation aktiviert und der rollende Rundballen in das Bindematerial eingeschlagen. Danach werden die Hydraulikzylinder 11 angesteuert, um die Klappe zu öffnen und den fertigen Rundballen auszustoßen.

Es wäre möglich, ein Verschließelement für die Einfüllöffnung vorzusehen, das bei Erreichen einer vorbestimmten Verdichtung des Rundballens die Einfüllöffnung automatisch absperrt. Es würde auch ausreichen, die Fördervorrichtung 9 bei Erreichen der ausreichenden Verdichtung abzuschalten, um die Zufuhr weiterer Abfälle zu unterbinden. Im einfachsten Fall wird aber ein akustisches oder optisches Signal abgegeben, damit die Bedienungsperson aufhört, weiter Abfälle einzufüllen.

## Patentansprüche

1. Vorrichtung zum Pressen und Verpacken von Folien-, Papier- und Pappe-Abfällen, insbesondere von aus Kunststoff-Verpackungsfolien bzw. Schrumpffolien bestehenden Abfällen, **dadurch gekennzeichnet**, daß in einem Gehäuse (G) eine im wesentlichen zylindrische Preßkammer (K) mit horizontaler Achse (X) und unveränderbarer Größe vorgesehen ist, die durch beabstandete Seitenwände (S) und mehrere über den Umfang verteilte, zu einer gleichsinnigen Drehung antreibbare, parallele Preßwalzen (W) begrenzt ist und eine nach außen offene Einfüllöffnung (E) aufweist, daß am Gehäuse (G) ein der Einfüllöffnung (E) abgewandter Teil (5) der Preßkammer (K) aufklappbar ist, und daß im Gehäuse (G) eine Einbindestation (B) mit Bindematerialspeicher (7) vorgesehen ist, wobei in der Preßkammer (K) aus durch die Einfüllöffnung (E) eingeführten Abfälllen (Y) ein verdichteter Rundballen rollbar, während der Rollbewegung um die Preßkammerachse (X) in Bindematerial einbindbar, und durch Öffnen des aufklappbaren Preßkammerteils (5) auswerfbar ist.

2. Vorrichtung nach Anspruch 1, **dadurch gekennzeichnet**, daß das Gehäuse (G) stationär auf einem auf dem Boden aufsetzbaren Unterbau (U) angeordnet ist, der, vorzugsweise, Transporthebeanschlüsse (2) und/oder Transporträder aufweist.

3. Vorrichtung nach Anspruch 1, **dadurch gekennzeichnet**, daß die Preßwalzen (W) gemeinsam an einen im Gehäuse (G) vorgesehenen Antriebsmotor (M), vorzugsweise einen Elektromotor oder einen Verbrennungsmotor, angeschlossen sind.

4. Vorrichtung nach Anspruch 1, **dadurch gekennzeichnet**, daß an der Vordeseite des Gehäuses (G) und angrenzend an den Boden bzw. den Unterbau (U) ein zur Einfüllöffnung (E) führender Schacht (6) angeordnet ist, und daß vor der Einfüllöffnung (E) eine Fördervorrichtung (9), vorzugsweise eine untenliegende, oberschlächtig fördernde Pick-up-Vorrichtung, vorgesehen ist.

5. Vorrichtung nach Anspruch 1, **dadurch gekennzeichnet**, daß der aufklappbare Teil (5) der Preßkammer (K) eine an der Hinterseite des Gehäuses (G) angeordnete Klappe ist, die um eine obenliegende, zur Preßkammerachse (X) parallele Schwenkachse (15) nach hinten oben schwenkbar ist, und daß ein Schließ- und Öffnungsantrieb (D) für die Klappe vorgesehen ist.

6. Vorrichtung nach Anspruch 5, **dadurch gekennzeichnet**, daß der Schließ- und Öffnungantrieb (D) wenigstens einen Hydraulikzylinder (11) aufweist, der eine Steuervorrichtung (C) mit einer, vorzugsweise vom Antriebsmotor (M) getriebenen, Hydraulikversorgungseinheit (12) verbunden ist.

7. Vorrichtung nach wenigstens einem der Ansprüche 1 bis 6, **dadurch gekennzeichnet**, daß eine mit einer Abschalt- oder Anzeigevorrichtung verbundene Preßdichte-Meßvorrichtung (13) vorgesehen ist.

8. Vorrichtung nach den Ansprüchen 6 und 7, **dadurch gekennzeichnet**, daß der Hydraulikzylinder (11) ein Meßglied der Preßdichte-Meßvorrichtung (13) ist.

9. Vorrichtung nach Anspruch 1, **dadurch gekennzeichnet**, daß der Bindematerialspeicher (7) am Gehäuse (G) oberhalb der Einfüllöffnung (E) angeordnet ist, und daß zwischen zwei benachbarten Preßwalzen (W) ein Einzugsspalt (14) für Bindematerial vorgesehen ist.

10. Vorrichtung nach Anspruch 1, **dadurch gekennzeichnet**, daß im Bindematerialspeicher (7) ein Bindenetz, Bindegarn oder Bindedraht als Bindematerial vorgesehen ist, und daß die Bindestation (B) Zuführeinrichtungen zum Einführen des Bindematerials in die Preßkammer (K) und eine Abtrennvorrichtung (16) für das Bindematerial aufweist.

11. Vorrichtung nach Anspruch 1, **dadurch gekennzeichnet**, daß oberhalb des Schachtes (6) eine begehbare Plattform (1) mit Zugriff zur Einbindestation (B) bzw. zum Bindematerialspeicher (7) angeordnet ist.

12. Vorrichtung nach Anspruch 1, **dadurch gekennzeichnet**, daß im Schacht (6) bzw. vor der Einfüllöffnung (E) ein oben- und querliegender Sicherheitsbügel (10) angeordnet und mit einer Sicherheits-Abschaltvorrichtung (17) verbunden ist.

13. Vorrichtung nach Anspruch 1, **dadurch gekennzeichnet**, daß am Gehäuse (G) unterhalb des hochschwenkbaren Teils (5) eine Ablaufstütze (3) für den aus der Preßkammer (K) austretenden Rundballen vorgesehen ist.

14. Vorrichtung nach wenigstens einem der Ansprüche 1 bis 13, **dadurch gekennzeichnet**, daß die Vorrichtung (W) eine zum stationären und autonomen Betrieb modifizierte Erntegut-Rundballenpresse ist.
